# EUROPÄISCHE PATENTSCHRIFT

(11) **EP 3 155 169 B1**
(45) Veröffentlichungstag und Bekanntmachung des Hinweises auf die Patenterteilung: **30.01.2019**
(21) Anmeldenummer: 15728833.3
(22) Anmeldetag: 10.06.2015
(51) Int. Cl.: D21H 19/00, D21H 19/44, D21H 19/52, D21H 19/54, D21H 23/32, D21H 23/40, B41M 5/337, B41M 5/44, D21H 19/38, D21H 19/46, D21H 19/58, D21H 19/56

(54) **CF-PAPIER**
CF PAPER
PAPIER CF

(30) Priorität: 13.06.2014 DE 102014108341
(43) Veröffentlichungstag der Anmeldung: 19.04.2017
(73) Patentinhaber: Papierfabrik August Koehler SE, 77704 Oberkirch (DE)
(72) Erfinder: JURISCH, Claus, 77654 Offenburg (DE); KÜHNE, Lutz, 77797 Ohlsbach (DE)
(74) Vertreter: Held, Stephan
(86) Internationale Anmeldenummer: PCT/EP2015/062874
(87) Internationale Veröffentlichungsnummer: WO 2015/189231

(56) Entgegenhaltungen:
- EP-A1- 1 176 255
- WO-A1-2008/006474
- DE-T2- 60 005 932
- DE-T5-112007 002 203

## Beschreibung

Die Erfindung betrifft ein beschichtetes Papier (coated front = CF), das heißt ein CF-Papier. Ferner betrifft die Erfindung die Verwendung eines CF-Papieres.

Selbstdurchschreibepapiere dienen zur Anfertigung von Kopien, z. B. für Rechnungen, Formulare, Verträge etc. Die Kopie entsteht durch chemische Reaktion zwischen einem Farbgeber und einem Farbnehmer. Das Prinzip beruht also darauf, eine Kopie anzufertigen, indem durch den von einem Schreibgerät, einem Computerdrucker, einer Schreibmaschine etc. erzeugten Druck auf das Papier eine chemische Reaktion zwischen zwei einander ergänzenden Schichten herbeigeführt wird. Die erste, übertragende Schicht, die sogenannte CB-Schicht (coated back - beschichtete Rückseite), enthält Mikrokapseln, die einen in einem hochsiedenden organischen Lösungsmittel gelösten farbgebenden Stoff enthalten. Wird mechanischer Druck auf die Mikrokapseln ausgeübt, dann platzen diese und geben den Farbgeber frei, der von der zweiten, aufnehmenden Schicht, der sogenannten CF-Schicht (coated front - beschichtete Vorderseite), absorbiert wird. Diese CF-Schicht enthält den Farbnehmer, der mit dem Farbgeber reagiert und eine Durchschrift erzeugt.

Innerhalb der SD-Papiere differenziert man zwischen drei Funktionspapieren: CB-Papiere enthalten eine übertragende Beschichtung auf der Rückseite, welche die mit dem Farbgeber gefüllten Mikrokapseln enthält. Dieses CB-Papier wird als das oberste Blatt von Formularsätzen verwendet.

Bei CFB-Papieren befindet sich der Farbnehmer auf der Vorderseite. Der in die Mikrokapseln eingelagerte Farbgeber befindet sich auf der Rückseite. CFB-Papier wird für das mittlere Blatt oder für eines von mehreren mittleren Blättern von Formularsätzen verwendet. Es ist der zentrale Bestandteil des Satzes, der die Kopie sowohl empfängt als auch weitergibt.

CF-Papiere werden als letztes Blatt von Formularsätzen verwendet. Die Vorderseite enthält den Farbnehmer. Die Rückseite ist nicht mit Mikrokapseln beschichtet.

Einen Sonderfall stellt das SC (self contained)-Papier dar. In diesem befinden sich Farbbildner und Farbnehmer auf demselben Blatt in ein und derselben Schicht auf der Papiervorderseite.

Die US 2 730 456 A beschreibt die Funktionsweise von Selbstdurchschreibepapieren, die darauf beruht, dass die auf der Rückseite eines Papiers (coated back = CB) aufgebrachten Mikrokapseln durch das Beschreiben der Papiervorderseite platzen und den in einem Öl gelösten Farbbildner freigeben, der dann durch das transportierende Öl auf das mit einem Farbnehmer beschichtete darunter liegende Papier (coated front = CF) übertragen wird. Durch die Reaktion von Farbbildner und Farbnehmer entsteht die Durchschrift. Die US 2 730 457 A offenbart den vorstehend erwähnten Sonderfall, wonach sich Farbbildner enthaltende Mikrokapseln und Farbnehmer in der oberseitigen Strichschicht eines einzigen Papiers (self contained = SC) befinden, wodurch auch bei Beschreibung eines hierauf liegenden herkömmlichen Papiers eine Durchschrift erzeugt wird.

Die Fixierung der Farbnehmerkomponenten und der weiteren üblichen Strichbestandteile erfolgt durch Bindemittel. Als Farbnehmerkomponenten werden heutzutage vorwiegend saure Tonminerale, beispielsweise säureaktivierter Bentonit oder synthetisches Natriumaluminiumsilicat (siehe US 2 730 456 A); Zink-dotierte Phenolharze (siehe DE 1 275 550 B, DE 2 228 431 A1, US 3 737 410 A, DE 2 854 318 A1 und GB 2 028 888 A), Zinksalze von Salicylsäurederivaten (vereinfacht als Zink-Salicylatderivate bezeichnet; siehe DE 2 147 585 A1, US 3 924 027 A, EP 0 470 516 A2, EP 0 657 300 A1) oder Abmischungen aus diesen eingesetzt. Als Bindemittel werden üblicherweise native oder modifizierte Stärken, Polyvinylalkohol oder synthetische Bindemittel, wie z. B. Styrol-Butadien-Latices (SB-Latices) und Styrol-Acrylat-Latices (SA-Latices), eingesetzt. Das Bindemittel muss einerseits sicherstellen, dass alle Strichbestandteile auch bei den weiteren Verarbeitungsschritten und dem ordnungsgemäßen Gebrauch des Papiers, einschließlich der Bedruckung, mittels unterschiedlicher Druckverfahren ausreichend fest fixiert sind. Andererseits muss das Bindemittel so gewählt werden, dass die Funktion des Selbstdurchschreibepapiers, das heißt die Durchschriftsleistung möglichst wenig beeinträchtigt wird. Als besonders vorteilhaft für eine gute Durchschriftsleistung hat sich eine Kombination der vorstehend erwähnten organischen Farbentwickler (Zink-dotiertes Phenolharz und/oder Zinksalzen von Salicylsäurederivaten) mit präzipitiertem Calciumcarbonat hoher Ölzahl erwiesen. Als Bindemittel werden Kombinationen aus SB-Latex und löslicher modifizierter Stärke oder durch Erhitzen gelöster nativer Stärke verwendet (siehe EP 0 657 300 A1).

Die bekannten druckempfindlichen Aufzeichnungsmaterialien zeigten jedoch verschiedene Nachteile, insbesondere kam es aufgrund der Einführung modernerer, schnellerer Offsetdruckverfahren, ganz besonders bei UV-härtenden Offsetdruckverfahren, in Formulardruckereien zu Störungen beim Bedrucken von CF-Papieren derart, dass auf den Gummitüchern der Druckwerke ein Farbaufbau entstand. Dies führte zu einem erhöhten Reinigungsaufwand und zu einer niedrigeren Produktivität. Es wurde zwar versucht, diese Problematik dadurch zu beheben, dass das Bindemittel bzw. Bindemittelsystem im CF-Papier abgeändert wurde. Anstelle eines Gemisches aus SB-Latex und modifizierter Stärke wurde versucht, auf letztere zu verzichten und den Anteil an SB-Latex zu erhöhen. Dies sollte eine ausreichende Strichbindung gewährleisten, da lösliche Stärken und andere Polymerlösungen in der Regel und im Gegensatz zu Polymerdispersionen (wie SB-Latex) dichte Filme ausbilden. Zwar konnte mit dieser Maßnahme die Bedruckbarkeit verbessert werden, allerdings musste ein spürbarer Verlust an Durchschriftsleistung in Kauf genommen werden. Dieser musste wiederum durch Erhöhung des Anteils an organischem Farbentwickler ausgeglichen werden, was unter wirtschaftlichen Gesichtspunkten ungünstig ist.

Aufgabe der vorliegenden Erfindung ist es daher, ein CF-Papier bereitzustellen, welches die Nachteile der bekannten CF-Papiere behebt. Insbesondere sollte ein CF-Papier bereitgestellt werden, das eine gute Durchschriftsleistung besitzt, ohne die anderen Anforderungen an ein CF-Papier, wie beispielsweise Bedruckbarkeit, Anteil an organischem Farbentwickler etc., negativ zu beeinflussen. Ferner wäre es wünschenswert, dass die Verwendung des CF-Papiers zu keinen Problemen im Offsetdruck bzw. im UV-härtendem Offsetdruckverfahren führt, insbesondere kein Farbaufbau auf dem Gummituch erfolgt.

Erfindungsgemäß wird diese Aufgabe durch ein CF-Papier nach Anspruch 1 gelöst, wonach dieses ein Rohpapier und eine auf diesem aufgebrachte Beschichtung umfasst, die mindestens ein Bindemittel, mindestens einen Farbnehmer, mindestens ein Streichpigment und übliche Hilfsstoffe enthält, und dadurch gekennzeichnet ist, dass das mindestens eine Bindemittel ein vernetztes biopolymeres Material in Form von Nanopartikeln umfasst.

Der Kern der Erfindung liegt somit darin, dass die Beschichtung, die auf das Rohpapier aufgebracht wird, ein vernetztes biopolymeres Material in Form von Nanopartikeln als Bindemittel enthält.

Ein derartiges Material ist beispielsweise aus der US 6 677 386 A und der WO 2008/022127 A2 bekannt.

Das vernetzte biopolymere Material in Form von Nanopartikeln wird vorzugsweise gemäß dem in der US 6 677 386 A beschriebenen Verfahren hergestellt, wonach ein biopolymeres Material, wie beispielsweise Stärke, enthaltend Amylose und Amylopektin oder beides, mit einem Plastifizierungsmittel vermischt wird. Diese Mischung wird unter Einwirkung starker Scherkräfte unter Plastifizierung des biopolymeren Materials und Bildung einer thermoplastischen Schmelzphase vermischt, bevorzugt in einem gleichläufigen, vollständig ineinandergreifenden Doppelschneckenextruder, wodurch die kristalline Struktur des biopolymeren Materials verloren geht. Um die Nanopartikel zu vernetzen, wird während des Mischvorgangs ein Vernetzungsmittel zugegeben. Die Nanopartikel verlassen den Extruder als Strang, der zu einem feinen Pulver gemahlen wird. Im Pulver liegen die Nanopartikel agglomeriert vor und können in einem wässrigen Medium dispergiert werden.

Bei dem biopolymeren Material kann es sich um Stärke oder andere Polysaccharide handeln, wie Cellulose und Pflanzengummis, sowie Proteine (z. B. Gelatine, Molkeprotein). Das biopolymere Material kann zuvor modifiziert werden, z. B. mit kationischen Gruppen, mit Carboxymethyl-Gruppen, durch Acylierung, Phosphorylierung, Hydroxyalkylierung, Oxidation oder ähnlichem. Stärken, Stärkederivate und Mischungen von anderen Polymeren, die mindestens 50 % Stärke enthalten, sind bevorzugt. Die Stärke, entweder als Einzelkomponente oder in einer Mischung mit anderen Polymeren, und die Stärkederivate weisen bevorzugt ein Molekulargewicht von mindestens 10.000 g/mol auf, und sind kein Dextran oder Dextrin. Besonders bevorzugt sind Wachsstärken, wie beispielsweise Wachsmaisstärke.

Das biopolymere Material hat bei Verfahrensbeginn bevorzugt ein Trockengewicht von mindestens etwa 50 Gew.-%. Das Verfahren wird bevorzugt bei mindestens etwa 40 °C durchgeführt, aber unterhalb der Zersetzungstemperatur des biopolymeren Materials, beispielsweise bei etwa 200 °C.

Die Scherkräfte können derart sein, dass 100 J spezifische mechanische Energie pro g biopolymeres Material einwirken. Abhängig von der eingesetzten Apparatur kann die Mindestenergie höher sein; auch dann, wenn nicht gelatiniertes Material eingesetzt wird, kann die spezifische mechanische Energie höher sein, z. B. mindestens etwa 250 J/g, bevorzugt mindestens etwa 500 J/g.

Bei dem Plastifizierungsmittel kann es sich um Wasser oder ein Polyol (beispielsweise Ethylenglykol, Propylenglykol, Polyglykole, Glycerol, Zuckeralkohole, Harnstoff, Zitronensäureester, etc.) handeln. Die Gesamtmenge an Plastifizierungsmittel liegt bevorzugt zwischen etwa 15 und 50 %. Ein Gleitmittel, wie Lecithin, andere Phospholipide oder Monoglyceride können, falls gewünscht, zugegeben werden, beispielsweise in einer Menge von etwa 0,5 bis 2,5 Gew.-%. Eine Säure, bevorzugt eine feste oder halbfeste organische Säure, wie Maleinsäure, Zitronensäure, Oxalsäure, Milchsäure, Glukonsäure oder ein Kohlenhydrat-abbauendes Enzym, wie Amylase, kann in einer Menge von etwa 0,01 bis 5 Gew.-%, bezogen auf das biopolymere Material, vorhanden sein. Die Säure oder das Enzym helfen bei der geringfügigen Depolymerisierung, die bei der Herstellung von Nanopartikeln definierter Größe vorteilhaft ist.

Die Vernetzung ist bevorzugt reversibel, wobei diese teilweise oder vollständig nach der mechanischen Verarbeitung aufgehoben werden kann. Geeignete reversible Vernetzungsmittel beinhalten vorzugsweise solche, die chemische Bindungen bei niedriger Wasserkonzentration bilden und in Gegenwart einer höheren Wasserkonzentration wieder dissoziieren oder hydrolysieren. Diese Art der Vernetzung führt zu einer temporär hohen Viskosität während des Verfahrens gefolgt von einer niedrigeren Viskosität nach Abschluß des Verfahrens.

Beispiele für reversible Vernetzungsmittel sind Dialdehyde und Polyaldehyde, Säureanhydride und gemischte Anhydride und dergleichen (z. B. Succinat und Essigsäureanhydrid). Geeignete Dialdehyde und Polyaldehyde sind Glutaraldehyd, Glyoxal, Periodat-oxidierte Kohlenwasserstoffe und dergleichen. Glyoxal ist ein besonders geeignetes Vernetzungsmittel.

Die Vernetzungsmittel können allein oder als Mischung aus reversiblen und nichtreversiblen Vernetzungsmitteln eingesetzt werden. Konventionelle Vernetzungsmittel, wie Epichlorhydrin und andere Epoxide, Triphosphate, Divinylsulphon können als nicht-reversible Vernetzungsmittel für biopolymeres Material auf Basis von Polysacchariden eingesetzt werden. Dialdehyde, Thiol-Reagenzien und dergleichen können für Biopolymere auf Proteinbasis verwendet werden. Die Vernetzung kann säure- oder basenkatalysiert stattfinden.

Die Menge an Vernetzungsmittel kann zwischen etwa 0,1 und 10 Gew.-%, in Bezug auf das biopolymere Material, liegen. Das Vernetzungsmittel kann schon zu Beginn der mechanischen Umsetzung vorliegen, aber im Falle eines nicht vorgelatinierten biopolymeren Materials, wie beispielsweise granularer Stärke, ist es bevorzugt, dass das Vernetzungsmittel später zugegeben wird, beispielsweise während der mechanischen Umsetzung.

Das mechanisch behandelte, vernetzte biopolymere Material wird dann vorzugsweise in die Form eines Latex gebracht, indem es in einem geeigneten Lösungsmittel dispergiert wird, üblicherweise in Wasser und/oder einem anderen hydroxylischen Lösungsmittel, wie beispielsweise Alkohol, bei einer Konzentration zwischen etwa 4 und 50 Gew.-%, besonders bevorzugt zwischen etwa 10 und 40 Gew.-%.

Vor der Dispergierung kann ein kryogener Mahlvorgang durchgeführt werden, aber Rühren bei leicht erhöhter Temperatur kann ebenso zielführend sein. Diese Verarbeitung führt zu einem Gel, das entweder spontan oder nach Induktion durch Wasseradsorption die Form eines Latex annimmt. Dieses Viskositätsverhalten kann für die Anwendung der Partikel genutzt werden, wie beispielsweise verbessertes Mischverhalten. Falls gewünscht, kann das dispergierte biopolymere Material weiter vernetzt werden, mit denselben oder anderen Vernetzungsmitteln.

Das Extrudat ist dadurch gekennzeichnet, dass es in einem wässrigen Lösungsmittel aufquellt, beispielsweise in Wasser oder einer Mischung, die mindestens etwa 50 % Wasser zusammen mit einem in Wasser mischbaren Lösungsmittel, wie einem Alkohol, enthält, und nach einem Viskositätsabfall eine Dispersion von Nanopartikeln bildet.

Als vernetztes biopolymeres Material in Form von Nanopartikeln können auch Konjugate derselben eingesetzt werden. Dabei handelt es sich um das vorstehend geschilderte vernetzte biopolymere Material in Form von Nanopartikeln, die chemisch oder physikalisch mit einem weiteren Additiv verbunden sind. Als Additive kommen beispielsweise Titandioxid, Aluminiumoxid, Aluminiumtrihydrat, Natrium-Aluminiumphosphat, Aluminiumphosphat, Natrium-Aluminium-Magnesiumsilikat, Flugasche, Zeolithe, Natrium-Aluminiumsilikat, Talgtonminerale, delaminierte Tonerde, calcinierte Kaolin-Tonerde, Montmorylonit-Tonerde, Nano-Tonerde, Silica-Partikel, Zinkoxid, Calciumcarbonat, optische Aufheller, Biocide, Stabilisatoren etc. sowie Kombinationen davon in Frage. Derartige Konjugate sind beispielsweise in der WO 2010/065750 A1 beschrieben.

In einer bevorzugten Ausführungsform ist das vernetzte biopolymere Material in Form von Nanopartikeln erhältlich mittels eines Verfahrens bei dem ein biopolymeres Material unter Einsatz von Scherkräften und in Anwesenheit eines Vernetzungsmittels plastifiziert und gegebenenfalls anschließend in einem hydroxylischen Lösungsmittel, vorzugsweise Wasser, dispergiert wird.

Das vernetzte biopolymere Material in Form von Nanopartikeln, welches in der Beschichtung des erfindungsgemäßen CF-Papiers als Bindemittel eingesetzt wird, ist auch aus der WO 2011/084692 A1, der EP 2 251 484 A1 und der EP 1 176 255 A1 bekannt.

In einer bevorzugten Ausführungsform weist das vernetzte biopolymere Material in Form von Nanopartikeln einen Quellungsgrad von kleiner als 2, vorzugsweise von kleiner als 1, auf. Der Quellungsgrad wurde wie in der DE 11 2007 002 203 T5 beschrieben ermittelt:
Der Quellungsgrad bezieht sich auf eine Volumenexpansion, wenn das vernetzte biopolymere Material in Form von Nanopartikeln in Wasser quillt. Hierzu wird eine Probe einer wasserfreien Menge von 2 g zu 200 ml reinem Wasser gegeben, darin dispergiert und unmittelbar danach wird diese in einem gut siedenden Wasserbad für 30 Minuten erhitzt und auf Raumtemperatur abgekühlt. Der Teil des Wassers, der verdampft wurde, wird zugesetzt und die Probe wird erneut dispergiert und 100 ml der Dispersion werden genau in einen Messzylinder gegeben. Der Messzylinder wird für 24 Stunden bei Raumtemperatur stehen gelassen und ein Präzipitat wird visuell bezüglich seiner Menge (ml) gemessen und dieser Wert wird als Quellungsgrad genommen.

In einer bevorzugten Ausführungsform handelt es sich bei dem vernetzten biopolymeren Material in Form von Nanopartikeln um Stärke, ein Stärkederivat oder ein Polymergemisch mit mindestens etwa 50 Gew.-% Stärke oder Stärkederivat, wobei Stärke und Stärkederivate besonders bevorzugt sind. Ganz besonders bevorzugt ist Stärke, insbesondere eine vernetzte Stärke, die nicht anderweitig modifiziert wurde.

Die durchschnittliche mittlere Partikelgröße des verwendeten biopolymeren Materials in Form von Nanopartikeln liegt vorzugsweise zwischen etwa 10 nm und 1000 nm, besonders bevorzugt zwischen etwa 40 nm und 500 nm, und ganz besonders bevorzugt zwischen etwa 40 nm und 200 nm.

Als vernetztes biopolymeres Material können beispielsweise Ecosphere 2240 Biolatex Binder, Ecosphere 92240, 92273, X282 Biolatex Binder und Ecosphere 2202 (alle erhältlich von EcoSynthetix Inc.) eingesetzt werden.

In einer bevorzugten Ausführungsform wird das vernetzte biopolymere Material in Form von Nanopartikeln in einer Menge von 5 bis 30 Gew.-%, vorzugsweise in einer Menge von 7 bis 25 Gew.-% und besonders bevorzugt in einer Menge von 15 bis 22 Gew.-%, bezogen auf das Gesamtgewicht der Beschichtung, eingesetzt. Zu hohe Mengen haben den Nachteil, dass die Durchschriftsleistung absinkt, während zu niedrige Mengen dazu führen, dass die Bindekraft vermindert wird.

In einer weiteren bevorzugten Ausführungsform enthält die Beschichtung, die auf das CF-Papier aufgebracht ist, ein weiteres Bindemittel. Unter einem weiteren Bindemittel wird ein Bindemittel verstanden, das zusätzlich zu dem vernetzten biopolymeren Material in Form von Nanopartikeln in der Beschichtung vorliegt. Das heißt in dem erfindungsgemäßen CF-Papier können ein oder mehrere übliche Bindemittel vollständig oder teilweise durch ein vernetztes biopolymeres Material in Form von Nanopartikeln ersetzt sein.

Die Auswahl des weiteren Bindemittels ist nicht kritisch. So können beispielsweise wasserlösliche Stärken, Stärkederivate, Hydroxyethylcellulose, Polyvinylalkohole modifizierten Polyvinylalkohole, Acrylamid/(Meth)acrylat-Copolymere und/oder Acrylamid/Acrylat/Methacrylat-Terpolymere als weitere Bindemittel eingesetzt werden. Dies führt zu Beschichtungen, die auf einem wasserlöslichen Bindemittel basieren.

Andererseits gibt es auch Bindemittel, die als wässrige Dispersion zum Einsatz kommen. Dabei handelt es sich beispielsweise um Latices, wie Polymethacrylatester, Styrol/Acrylatester-Copolymere, Styrol/Butadien-Copolymere, Poyurethane, Acrylat/Butadien-Copolymere, Polyvinylacetate und/oder Acrylnitril/Butadien-Copolymere und dergleichen. Es liegt im fachmännischen Erwägen, hier im Einzelfall ein besonders geeignetes Bindemittel oder Bindemittelgemisch heranzuziehen.

Es ist jedoch bevorzugt, dass das weitere Bindemittel aus der Gruppe bestehend aus Styrol-Butadien-Latices und Styrol-Acrylat-Latices ausgewählt ist, da diese rheologische und/oder ökonomische Vorteile besitzen.

Kommt ein weiteres Bindemittel zum Einsatz, dann ist es bevorzugt, dass das vernetzte biopolymere Material in Form von Nanopartikeln in einer Menge von 2 bis 99 Gew.-%, vorzugsweise in einer Menge von 10 bis 80 Gew.-% und besonders bevorzugt in einer Menge von 40 bis 60 Gew.-%, bezogen auf das Gesamtgewicht der Bindemittel, vorliegt. Zu niedrige Mengen schmälern den zu erzielenden Vorteil in Bezug auf die Durchschriftsleistung, während zu hohe Mengen diese zwar verbessern, jedoch nicht zum optimalen Ergebnis führen.

Die Auswahl des Farbnehmers, ist nicht kritisch. Es ist jedoch bevorzugt, dass der Farbnehmer ausgewählt ist aus der Gruppe bestehend aus sauren Tonmineralen, wie z. B. säureaktiviertem Bentonit oder synthetischem Natriumaluminiumsilikat, Zink-dotierten Phenolharzen, Zinksalzen alkylarylierter, vorzugsweise styrylierter, Salicylsäurederivate oder Abmischungen davon. Saure Tonminerale sind z. B. in der US 2 730 456 A, Zink-dotierte Phenolharze in der DE 1 275 550 B, in der DE 2 228 431 A1, in der US 3 737 410 A, in der DE 2 854 318 A1 und in der GB 2 028 888 A, und Zinksalze alkylarylierter, vorzugsweise styrylierter, Salicylsäurederivate (vereinfacht als Zink-Salicylatderivate bezeichnet) in der DE 2 147 585 A1, in der US 3 924 027 A, in der EP 0 470 516 A2 und in der EP 0657300 A1 beschrieben. Bevorzugt ist der Einsatz von organischen Farbnehmern, wie beispielsweise alkylarylierter Zinksalze, vorzugsweise styrylierter Salicylsäurederivate, und von Zink-dotierten Phenolharzen. Diese organischen Entwickler haben gegenüber den mineralischen Entwicklern den Vorteil, dass sie zu einer geringen Druckplattenabrasion führen und eine geringe Staubneigung aufweisen, da die Komponenten besser gebunden sind.

Der mindestens eine Farbnehmer kommt in dem erfindungsgemäßen CF-Papier vorzugsweise in einer Menge von etwa 1 bis 30 Gew.-%, bevorzugt in einer Menge von etwa 2 bis 20 Gew.-% und ganz besonders bevorzugt in einer Menge von etwa 4 bis 12 Gew.-%, bezogen auf das Gesamtgewicht der Beschichtung, zum Einsatz.

Die Auswahl des Streichpigmentes ist ebenfalls nicht kritisch. In Frage kommen beispielsweise Aluminiumsilikate, wie Kaolin/Clay, Magnesiumsilikate, Calciumcarbonate, wie gemahlenes Calciumcarbonat oder gefälltes Calciumcarbonat, Calciumaluminiumsulfate, wie Satinweiß, Bariumsulfate, Natriumsulfate, wie Gips, Titandioxid und synthetische Pigmente, wie Polystyrol sowie Talkum. Besonders bevorzugt ist der Einsatz von gemahlenem und/oder gefälltem Calciumcarbonat (GCC und/oder PCC) aufgrund der damit zu erzielenden Schreibleistung und ökonomischer Gründe.

Das mindestens eine Streichpigment kommt in dem erfindungsgemäßen CF-Papier vorzugsweise in einer Menge von etwa 50 bis 90 Gew.-%, besonders bevorzugt in einer Menge von etwa 60 bis 85 Gew.-% und ganz besonders bevorzugt in einer Menge von etwa 65 bis 80 Gew.-%, bezogen auf das Gesamtgewicht der Beschichtung, zum Einsatz.

Unter üblichen Hilfsstoffen werden im Sinne der vorliegenden Erfindung Dispergiermittel, Entschäumer, Vernetzungsmittel, Rheologie steuernde Mittel, Antioxidantien, UV-Stabilisatoren, optische Aufheller, Schmiermittel, Tenside und/oder Färbemittel verstanden. Diese liegen vorzugsweise in einer Menge von etwa 0,5 bis 5 Gew.-%, besonders bevorzugt in einer Menge von etwa 1 bis 4 Gew.-% und ganz besonders bevorzugt in einer Menge von etwa 1.5 bis 3 Gew.-% vor.

Die Beschichtung, die das vernetzte biopolymere Material in Form von Nanopartikeln enthält und auf das Rohpapier aufgetragen wird, führt im erfindungsgemäßen Fall zu einem Gewicht der Auftragsschicht (Trockengewicht) von 1 bis 6 g/m², bevorzugt von 2 bis 5 g/m² und besonders bevorzugt von 3 bis 4.5 g/m².

Die Auswahl des Rohpapiers ist ebenfalls nicht kritisch. Es ist jedoch bevorzugt, dass das Rohpapier auf Cellulosefasern basiert, ein synthetischer Papierträger, dessen Fasern insbesondere ganz oder teilweise aus Kunststofffasern bestehen. Das Rohpapier wird in einem Flächengewicht von etwa 40 bis 180 g/m², insbesondere von etwa 50 bis 100 g/m²eingesetzt.

In einer bevorzugten Ausführungsform handelt es sich bei dem erfindungsgemäßen CF-Papier um ein CF-Papier, das ein Rohpapier und eine auf diesem aufgebrachte Beschichtung umfasst, wobei die Beschichtung als Bindemittel ein vernetztes biopolymeres Material in Form von Nanopartikeln, als weiteres Bindemittel einen Styrol-Butadien-Latex und/oder einen Styrol-Acrylat-Latex, einen Farbnehmer, bei dem es sich vorzugsweise um Zinksalze styrylierter Salicylsäurederivate und/oder Zink-dotierte Phenolharze, als Streichpigment Calciumcarbonat und übliche Hilfsstoffe enthält.

Bei diesem speziellen CF-Papier ist es ebenfalls bevorzugt, dass das vernetzte biopolymere Material in Form von Nanopartikeln in einer Menge von etwa 2 bis 99 Gew.-%, und besonders bevorzugt in einer Menge von 40 bis 60 Gew.-%, bezogen auf das Gesamtgewicht der Bindemittel, vorliegt.

In einer weiteren bevorzugten Ausführungsform handelt es sich bei dem erfindungsgemäßen CF-Papier um ein CF-Papier, das ein Rohpapier und eine auf diesem aufgebrachten Beschichtung umfasst, wobei die Beschichtung als Bindemittel ein vernetztes biopolymeres Material in Form von Nanopartikeln in einer Menge von etwa 5 bis 15 Gew.-%, als weiteres Bindemittel einen Styrol-Butadien-Latex in einer Menge von 1 bis 15 Gew-%, als Farbnehmer Zinksalze styrylierter Salicylsäurederivate, oder Zink-dotierte Phenolharze in einer Menge von 5 bis 20 Gew.-%, als Streichpigment gefälltes Calciumcarbonat in einer Menge von 50 bis 80 Gew.-% und gemahlenes Calciumcarbonat in einer Menge von 0 bis 20 Gew.-%, vorzugsweise in einer Menge von 10 bis 20 Gew.-%, und übliche Hilfsstoffe in einer Menge von etwa 1 bis 3 Gew.-%, jeweils bezogen auf das Gesamtgewicht der Beschichtung, enthält.

Die vorliegende Erfindung betrifft auch die Verwendung des vorstehend geschilderten CF-Papieres als Selbstdurchschreibepapier. Insbesondere kann dieses in Kombination mit einem CB-Papier eingesetzt werden. Auch der Einsatz der erfindungsgemäßen CF-Papierbeschichtung in einem CFB-Papier ist möglich.

Die Erfindung betrifft auch die Verwendung des vorstehend beschriebenen CF-Papieres in einem Offsetdruckverfahren. Unter Offsetdruckverfahren werden Offsetdruckverfahren mit konventionellen Druckfarben (wegschlagende Trocknung) als auch UV-härtende Offsetdruckverfahren (das heißt mit UV-härtende Druckfarben und UV-Direkttrockung nach jedem Druckwert) verstanden. Besonders bevorzugt ist die Verwendung des erfindungsgemäßen CF-Papieres in UV-härtenden Offsetdruckverfahren.

Wie einleitend erwähnt, erfolgt die Anwendung des erfindungsgemäßen CF-Papieres, das in der Beschichtung unter anderem den Farbnehmer enthält, zusammen mit einem weiteren Papier. Letzteres enthält vorzugsweise Mikrokapseln, die einen in einem Bindemittel eingelagerten farbgebenden Stoff enthalten. Der Fachmann ist in der Lage, geeignete Farbgeber auszuwählen. Vorzugsweise werden Farbgeber in Form von 2-Anilino-3-methyl-6-diethyl-amino-fluoran, 2-Anilino-3-methyl-6-di-n-butylamino-fluoran, 2-Anilino-3-methyl-6-(N-ethyl-,N-p-toluidino-amino)-fluoran, 2-Anilino-3-methyl-6-(N-methyl-, N-propyl-amino)-fluoran, 2-Anilino-3-methyl-6-(N-ethyl-, N-isopentyl-amino)-fluoran, 3,3-Bis-(4-dimethylamino-phenyl)-6-dimethyl-amino-phthalid 6-Diethylamino-3-methyl-2-(2,4-dimethylphenyl)-amino-fluoran, 3-[Bis[4-(methylphenyl-amino)phenyl]methyl]-9-butyl-9H-carbazol, 2-[Bis(phenylmethyl) amino]-6-(diethylamino)-fluoran, 3,3-Bis(2-methyl-1-octyl-1H-indol-3-yl)-1(3H)-isobenzofuranon, 6-[Ethyl(4-methylphenyl)amino]-2-methyl-fluoran und/oder 6-Diethylamino-2-ethoxycarbonyl-fluoran eingesetzt.

Die Vorteile, die mit der vorliegenden Erfindung verbunden sind, lassen sich im Wesentlichen wie folgt zusammenfassen:
Die vorliegende Erfindung führt zu einem CF-Papier, das eine sehr gute Durchschriftsleistung zeigt, ohne beispielsweise die Bedruckbarkeit zu beeinträchtigen. Auch ist es mittels des erfindungsgemäßen CF-Papiers möglich den Farbnehmeranteil im Bindemittel möglichst niedrig zu halten. Ferner ist der Teil- bzw. Vollaustausch bekannter Bindemittel, wie beispielsweise SB-Latex, gegen das vernetzte biopolymere Material in Form von Nanopartikeln unter wirtschaftlichen Gesichtspunkten vorteilhaft.

Die Erfindung wird nachfolgend anhand von nicht beschränkten Beispielen im Detail erläutert.

### Beispiele:

### Beispiel 1: Herstellung und Bewertung eines CF-Papieres bei 50 %igem Austausch von SB-Latex gegen Ecosphere 2240 (Farbnehmer: Zink-Salicylatderivat)

Gemäß den in Tabelle 1 beschriebenen Trockenrezepten wurden homogene wässrige Streichmassen angesetzt und unbeschichtete Rohpapiere (Flächengewicht 48 g/m²) mittels einer Laborstreichmaschine von Koehler SE über Rakelauftrag beschichtet. Die Trocknung erfolgte mittels Infrarotstrahler und Heißluft. Der Strichauftrag wurde mittels Differenzwägung bestimmt. Vor der Auswertung wurden die Papiere klimatisiert (22°C, 50% r. F.) und die weiteren Funktionsprüfungen ebenfalls unter konstanten Raumklimabedingungen geprüft. Ein objektiver Vergleich der Durchschriftsleistung ist nur dann möglich, wenn die Strichbindung (Prüfung: Trockenrupfen) und der Weißgrad des Papieres, auf dem die Durchschrift erzeugt wird, vergleichbare Werte aufweisen.

**Tabelle 1**

| Rezeptur | | A | B |
|---|---|---|---|
| PCC (gefälltes (precipitated) Calciumcarbonat) | [Gew.-Teile] | 80 | 80 |
| GCC (gemahlenes (ground) Calciumcarbonat) | [Gew.-Teile] | 20 | 20 |
| Zn-Salicylatderivat | [Gew.-Teile] | 8,8 | 8,8 |
| SB-Latex | [Gew.-Teile] | 25,24 | 12,62 |
| Ecosphere 2240 | [Gew.-Teile] | | 12,62 |
| Sonstige Hilfsstoffe | [Gew.-Teile] | 2,4 | 2,4 |
| Strichauftrag trocken | [g/m²] | 4,2 | 4,0 |
| Durchschriftsleistung | [Kontrast-%] | 28,0 | 33,5 |
| Weißgrad R 457 | [%] | 91,0 | 90,6 |
| Trockenrupfen | [m/s] | 2 | 1-2 |

Die Durchschriftsleistung wurde wie folgt bestimmt: Mittels einer elektrischen Schreibmaschine (Olympia Standard 200i, Typenrad OCR-A.10, Symbol Vollfläche) wurde auf dem zu prüfenden CF-Papier (Farbnehmer) durch ein CB-Papier geprüfter Qualität (Farbgeber, Schwarzschrift) und mit definierter Anschlagstärke eine definierte 3x4 cm große Durchschriftsfläche erzeugt und 30 s danach mit einem Farbmessgerät (Elrepho SE070, Lichtart D65) die Schwärzung als Reflexion gemessen. Angegeben wird der Kontrast in % [(Reflexion R_{y} des unbedruckten Bereichs - Reflexion R_{y} des bedruckten Bereichs)/Reflexion R_{y} unbedruckt].

Der Weißgrad der Papiere wurde ebenfalls mit dem Farbmessgerät Elrepho SE070 bestimmt. Es wurden so viele Lagen Papier übereinandergelegt, bis die Opazität des Stapels 100 % erreichte und dann die Weiße der Oberfläche durch Reflexionsmessung (Lichtart R 457 D 65) bestimmt.

Eine in der Papierindustrie gängige Prüfung ist das "Trockenrupfen", welches als Maß für die Strichbindung und damit als Maß für die Offsetbedruckbarkeit dient. Diese Prüfung wurde mit dem Drucktestgerät "Prüfbau MZ II" der Prüfbau Dr.-Ing. H. Dürner GmbH durchgeführt. Ein Streifen definierter Abmessung des zu prüfenden Papiers wurde mit einer definierten Menge einer standardisierten Druckfarbe nach einer definierten Prozedur über eine Gummiwalze bedruckt. Führt man diesen Vorgang bei unterschiedlichen Geschwindigkeiten durch, so kommt es verstärkt zu Fehlstellen im Druckbild durch Herausreißen von Papierfasern oder Pigmenten. Die Maximale Druckgeschwindigkeit [m/s], bei der sich noch ein fehlerfreies Druckbild ergibt, wird als Wert für das "Trockenrupfen" angegeben.

Dieses Beispiel zeigt, dass der Einsatz einer Beschichtung mit Rezeptur B (50 %-iger Austausch des SB-Latex gegen Ecosphere 2240) gegenüber dem Einsatz einer Beschichtung mit Rezeptur A (100 % SB-Latex) zu einer deutlichen Verbesserung der Durchschriftsleistung führt.

### Beispiel 2: Herstellung und Bewertung eines CF-Papiers bei 50 %-igen Austausch von SB-Latex gegen Ecosphere 2240 (Farbnehmer: Zink-dotiertes Phenolharz)

In analoger Weise wie in Beispiel 1 wurden CF-Papiere hergestellt. Die entsprechenden Trockenrezepturen können Tabelle 2 entnommen werden.

**Tabelle 2**

| Rezeptur | | C | D |
|---|---|---|---|
| PCC (gefälltes (precipitated) Calciumcarbonat) | [Gew.-Teile] | 80 | 80 |
| GCC (gemahlenes (ground) Calciumcarbonat) | [Gew.-Teile] | 20 | 20 |
| Zn-dotiertes Phenolharz | [Gew.-Teile] | 16,0 | 16,0 |
| SB-Latex | [Gew.-Teile] | 25,24 | 12,62 |
| Ecosphere 2240 | [Gew.-Teile] | | 12,62 |
| Sonstige Hilfsstoffe | [Gew.-Teile] | 2,4 | 2,4 |
| Strichauftrag trocken | [g/m²] | 4,0 | 4,3 |
| Durchschriftsleistung | [Kontrast-%] | 25,3 | 32,5 |
| Weißgrad R 457 | [%] | 89,1 | 89,0 |
| Trockenrupfen | [m/s] | 1-2 | 2 |

Der Einsatz einer Beschichtung mit Rezeptur D (50 %-iger Austausch des SB-Latex gegen Ecosphere 2240) führte zu einer deutlichen Verbesserung der Durchschriftsleistung gegenüber dem Einsatz einer Beschichtung gemäß Rezeptur C (100 % SB-Latex).

### Beispiel 3: Herstellung und Bewertung eines CF-Papiers bei 50 %-igem Austausch des SB-Latex gegen verschiedene stärkebasierte Bindemittel (Farbnehmer: Zink-Salicylatderivat) sowie eines CF-Papiers mit ausschließlich Ecosphere 2240 als Bindemittel

In analoger Weise wie in Beispiel 1 wurden CF-Papiere hergestellt. Die Trockenrezepturen können Tabelle 3 entnommen werden.

Dieses Beispiel zeigt, dass der Teilersatz des SB-Latex durch Ecosphere 2240 zu einer vergleichbaren bzw. sogar geringfügig besseren Durchschriftsleistung als bei einem Teilersatz durch andere lösliche Stärketypen führt.

Ecosphere 2240 wurde durch zwei gängige stärkebasierte lösliche Bindemittel bei sonst gleichbleibender Streichfarbenformulierung ersetzt. Native Kartoffelstärke wurde als 20 %-ige Lösung, die durch Erhitzen mit anschließendem enzymatischem Teilabbau mittels α-Amylase hergestellt wurde, eingesetzt. Bei Sobex 222 handelt es sich um eine kaltwasserlösliche hochsubstituierte depolymerisierte Stärke, die in Pulverform eingesetzt wurde. In Rezeptur I wurde vollständig auf SB-Latex verzichtet und nur Ecosphere 2240 als Bindemittel eingesetzt. Im Vergleich zu Rezeptur F (SB-Latex : Ecosphere 2240, 50:50) wurde zwar eine etwas niedrigere Durchschriftsleistung gefunden. Diese liegt jedoch immer noch oberhalb der Durchschriftleistung des Standards (Rezeptur E).

**Tabelle 3**

| Rezeptur | | E | F | G | H | I |
|---|---|---|---|---|---|---|
| PCC (gefälltes (precipitated) Calciumcarbonat) | [Gew.-Teile] | 80 | 80 | 80 | 80 | 80 |
| GCC (gemahlenes (ground) Calciumcarbonat) | [Gew.-Teile] | 20 | 20 | 20 | 20 | 20 |
| Zn-Salicylatderivat | [Gew.-Teile] | 8,8 | 8,8 | 8,8 | 8,8 | 8,8 |
| SB-Latex | [Gew.-Teile] | 25,2 | 12,6 | 12,6 | 12,6 | |
| Ecosphere 2240 | [Gew.-Teile] | | 12,6 | | | 25,2 |
| Sobex 222 | [Gew.-Teile] | | | 12,6 | | |
| Native Kartoffelstärke | [Gew.-Teile] | | | | 12,6 | |
| Sonstige Hilfsstoffe | [Gew.-Teile] | 2,4 | 2,4 | 2,4 | 2,4 | 2,4 |
| Strichauftrag trocken | [g/m²] | 4,0 | 4,0 | 4,0 | 4,0 | 4,0 |
| Durchschriftsleistung | [Kontrast-%] | 32,0 | 37,5 | 35,1 | 35,1 | 35,2 |
| Weißgrad R 457 | [%] | 91,0 | 90,4 | 90,8 | 90,3 | 89,6 |
| Trockenrupfen | [m/s] | 0,5-1 | 1 | 2 | 1-2 | 1-2 |

### Beispiel 4: Bedruckbarkeit mittels des erfindungsgemäßen CF-Papieres

Um nachzuweisen, dass der Teilaustausch von 50 % des SB-Latex durch Ecosphere 2240 zu keiner Verschlechterung der Bedruckbarkeit mit UV-Offsetdruckfarben führt, wurde ein Pilotstreichversuch durchgeführt, um die entsprechende Papiermenge bereitstellen zu können.

Der Pilotstreichversuch wurde mit Streichfarben analog Beispiel 3 durchgeführt. Von den in Beispiel 3 untersuchten zwei verschiedenen löslichen Stärken wurde der kaltwasserlösliche Typ Sobex 222 ausgewählt. Der Auftrag der Streichmassen erfolgt mittels Walze und glattem Rakel zur Einstellung des Strichgewichts bei einer Geschwindigkeit von 300 m/min.

Die Papiere wurden in einer Druckerei im Rollenoffsetdruck (7000 Laufmeter) a) mit konventionellen Druckfarben (wegschlagende Trocknung) und b) mit UV-härtenden Druckfarben und UV-Direkttrocknung nach jedem Druckwerk (vier verschiedene Farben in vier Druckwerken) bedruckt.

Der konventionelle Offsetdruck bereitete keine Probleme und führte in allen Fällen zu einem guten Druckbild.

Beim UV-Offsetdruck kam es mit der Beschichtung gemäß Rezeptur G (lösliche Stärke) während des Druckvorgangs in zwei Druckwerken zu einem Farbaufbau auf dem Gummituch, der zu einem unruhigen Druck und schlechtem Druckbild führte, während sich das Papier mit der Beschichtung gemäß Rezeptur F problemlos bedrucken ließ.

Die Trockenrezepturen und die jeweilige Eigenschaften sind Tabelle 4 zu entnehmen.

**Tabelle 4**

| Rezeptur | | E | F | G |
|---|---|---|---|---|
| PCC (gefälltes (precipitated) Calciumcarbonat) | [Gew.-Teile] | 80 | *80* | *80* |
| GCC (gemahlenes (ground) Calciumcarbonat) | [Gew.-Teile] | *20* | *20* | *20* |
| Zn-Salicylatderivat | [Gew.-Teile] | 8,8 | 8,8 | 8,8 |
| Ecosphere vordisp. | [Gew.-Teile] | | 12,6 | |
| Sobex 222 | [Gew.-Teile] | | | 12,6 |
| SB-Latex | [Gew.-Teile] | 25,2 | 12,6 | 12,6 |
| Sonstige Hilfsstoffe | [Gew.-Teile] | 2,4 | 2,4 | 2,4 |
| Auftrag | [g/m²] | 1,8 | 1,7 | 2,8 |
| Durchschriftsleistung | [Kontrast-%] | 25,9 | 28,2 | 29,1 |
| Trockenrupfen | [m/s] | 3,5 | 3,5 | 3,5 |
| UV-Offsetdruck mit 4 Farben in 4 Druckwerken | Farbaufbau nach 7000 m | Nein | Nein | Deutlich in 2 Druckwerken |
| Konventioneller Offsetdruck Offsetdruck | Gesamtbewertung | In Ordnung | In Ordnung | In Ordnung |

## Patentansprüche

1. CF-Papier, umfassend ein Rohpapier und einer auf diesem aufgebrachten Beschichtung, die mindestens ein Bindemittel, mindestens einen Farbnehmer, mindestens ein Streichpigment und übliche Hilfsstoffe enthält, **dadurch gekennzeichnet, dass** das mindestens eine Bindemittel ein vernetztes biopolymeres Material in Form von Nanopartikeln umfasst.

2. CF-Papier nach Anspruch 1, **dadurch gekennzeichnet, dass** das vernetzte biopolymere Material in Form von Nanopartikeln einen Quellungsgrad, bestimmt wie in der Beschreibung beschrieben, von kleiner als 2, vorzugsweise von kleiner als 1, aufweist.

3. CF-Papier nach einem der vorangegangenen Ansprüche, **dadurch gekennzeichnet, dass** das vernetzte biopolymere Material in Form von Nanopartikeln eine Stärke, ein Stärkederivat oder ein Polymergemisch mit mindestens 50 Gew.-% Stärke oder Stärkederivat, vorzugsweise Stärke, ist.

4. CF-Papier nach einem der vorangegangenen Ansprüche, **dadurch gekennzeichnet, dass** das vernetzte biopolymere Material in Form von Nanopartikeln eine durchschnittliche, mittlere Partikelgröße zwischen 10 nm und 1000 nm, bevorzugt zwischen 40 nm und 500 nm, und besonders bevorzugt zwischen 40 nm und 200 nm, besitzt.

5. CF-Papier nach einem der vorangegangenen Ansprüche, **dadurch gekennzeichnet, dass** das vernetzte biopolymere Material in Form von Nanopartikeln in einer Menge von 5 bis 30 Gew.-%, vorzugsweise in einer Menge von 7 bis 25 Gew.-% und besonders bevorzugt in einer Menge von 15 bis 22 Gew.-%, bezogen auf das Gesamtgewicht der Beschichtung, enthalten ist.

6. CF-Papier nach einem der vorangegangenen Ansprüche, **dadurch gekennzeichnet, dass** in der Beschichtung ein weiteres Bindemittel enthalten ist.

7. CF-Papier nach Anspruch 6, **dadurch gekennzeichnet, dass** das weitere Bindemittel ausgewählt ist aus der Gruppe bestehend aus nativen Stärken, modifizierten Stärken, Polyvinylalkohol, Styrol-Butadien-Latices (SB-Latices) und Styrol-Acrylat-Latices (SA-Latices).

8. CF-Papier nach Anspruch 7, **dadurch gekennzeichnet, dass** das weitere Bindemittel ein Styrol-Butadien-Latex und/oder Styrol-Acrylat-Latex ist.

9. CF-Papier nach einem der vorangegangenen Ansprüche, **dadurch gekennzeichnet, dass** das vernetzte biopolymere Material in Form von Nanopartikeln in einer Menge von 2 bis 99 Gew.-%, vorzugweise in einer Menge von 10 bis 80 Gew.-% und besonders bevorzugt in einer Menge von 40 bis 60 Gew.-%, bezogen auf das Gesamtgewicht der Bindemittel, enthalten ist.

10. CF-Papier nach einem der vorangegangenen Ansprüche, **dadurch gekennzeichnet, dass** der Farbnehmer ausgewählt ist aus der Gruppe bestehend aus Zink-dotierten Phenolharzen und Zinksalzen alkylarylierter, vorzugsweise styrylierter, Salicylsäurederivate oder Abmischungen davon.

11. CF-Papier nach einem der vorangegangenen Ansprüche, **dadurch gekennzeichnet, dass** die Beschichtung als weiteres Bindemittel einen Styrol-Butadien-Latex und/oder einem Styrol-Acrylat-Latex als Farbnehmer Zinksalze styrylierter Salicylsäurederivate oder Zink-dotierte Phenolharze, als Streichpigment CaCO₃ und übliche Hilfsstoffe enthält.

12. CF-Papier nach Anspruch 11, **dadurch gekennzeichnet, dass** das vernetzte biopolymere Material in Form von Nanopartikeln in einer Menge von 2 bis 99 Gew.-%, vorzugsweise in einer Menge von 10 bis 80 Gew.-%, bevorzugt in einer Menge von 40 bis 60 Gew.-%, bezogen auf das Gesamtgewicht der Bindemittel, enthalten ist.

13. Verwendung des CF-Papieres nach einem der vorangegangenen Ansprüche als Selbstdurchschreibepapier in Kombination mit einem CB-Papier oder in einem CFB-Papier.

14. Verwendung des CF-Papieres nach einem der Ansprüche 1 bis 12 in einem Offsetdruckverfahren, insbesondere einem UV-härtendem Offsetdruckverfahren.

## Claims

1. CF paper, comprising a base paper and a coating applied thereto which contains at least one binder, at least one colour developer, at least one coating pigment and conventional auxiliaries, **characterised in that** the at least one binder comprises a cross-linked biopolymer material in the form of nanoparticles.

2. CF paper according to Claim 1, **characterised in that** the cross-linked biopolymer material in the form of nanoparticles has a degree of swelling, determined as described in the description, of less than 2, preferably of less than 1.

3. CF paper according to one of the preceding claims, **characterised in that** the cross-linked biopolymer material in the form of nanoparticles is a starch, a starch derivative or a polymer mixture with at least 50% by weight starch or starch derivative, preferably starch.

4. CF paper according to one of the preceding claims, **characterised in that** the cross-linked biopolymer material in the form of nanoparticles has an average mean particle size of between 10 nm and 1000 nm, preferably between 40 nm and 500 nm, and especially preferably between 40 nm and 200 nm.

5. CF paper according to one of the preceding claims, **characterised in that** the cross-linked biopolymer material in the form of nanoparticles is contained in an amount of from 5 to 30% by weight, preferably in an amount of from 7 to 25% by weight, and especially preferably in an amount of from 15 to 22% by weight, relative to the total weight of the coating.

6. CF paper according to one of the preceding claims, **characterised in that** a further binder is contained in the coating.

7. CF paper according to Claim 6, **characterised in that** the further binder is selected from the group consisting of native starches, modified starches, polyvinyl alcohol, styrene/butadiene latices (SB latices) and styrene/acrylate latices (SA latices).

8. CF paper according to Claim 7, **characterised in that** the further binder is a styrene/butadiene latex and/or styrene/acrylate latex.

9. CF paper according to one of the preceding claims, **characterised in that** the cross-linked biopolymer material in the form of nanoparticles is contained in an amount of from 2 to 99% by weight, preferably in an amount of from 10 to 80% by weight, and especially preferably in an amount of from 40 to 60% by weight, relative to the total weight of the binder.

10. CF paper according to one of the preceding claims, **characterised in that** the colour developer is selected from the group consisting of zinc-doped phenol resins and zinc salts of alkylarylated, preferably styrylated, salicylic acid derivatives or mixtures thereof.

11. CF paper according to one of the preceding claims, **characterised in that** the coating contains as further binder a styrene/butadiene latex and/or a styrene/acrylate latex as colour developer zinc salts of styrylated salicylic acid derivatives or zinc-doped phenol resins, as coating pigment CaCO₃ and conventional auxiliaries.

12. CF paper according to Claim 11, **characterised in that** the cross-linked biopolymer material in the form of nanoparticles is contained in an amount of from 2 to 99% by weight, preferably in an amount of from 10 to 80% by weight, preferably in an amount of from 40 to 60% by weight, relative to the total weight of the binder.

13. Use of the CF paper according to one of the preceding claims as carbonless copy paper in combination with a CB paper or in a CFB paper.

14. Use of the CF paper according to one of Claims 1 to 12 in an offset printing process, especially a UV-curing offset printing process.

## Revendications

1. Papier CF, comprenant un papier brut et un revêtement déposé sur celui-ci, qui contient au moins un liant, au moins un accepteur de couleur, au moins un pigment de couchage et d'autres auxiliaires, **caractérisé en ce que** l'au moins un liant comprend une matière biopolymère réticulée sous forme de nanoparticules.

2. Papier CF selon la revendication 1, **caractérisé en ce que** la matière biopolymère réticulée sous forme de nanoparticules présente un degré de gonflement, déterminé comme décrit dans la description, inférieur à 2, de préférence inférieur à 1.

3. Papier CF selon l'une des revendications précédentes, **caractérisé en ce que** la matière biopolymère réticulée sous forme de nanoparticules est un amidon, un dérivé d'amidon ou un mélange de polymères comportant au moins 50 % en poids d'amidon ou de dérivé d'amidon, de préférence d'amidon.

4. Papier CF selon l'une des revendications précédentes, **caractérisé en ce que** la matière biopolymère réticulée sous forme de nanoparticules possède une taille moyenne de particules comprise entre 10 nm et 1000 nm, de préférence entre 40 nm et 500 nm, et particulièrement de préférence entre 40 nm et 200 nm.

5. Papier CF selon l'une des revendications précédentes, **caractérisé en ce que** la matière biopolymère réticulée sous forme de nanoparticules est présente en une quantité de 5 à 30 % en poids, de préférence en une quantité de 7 à 25 % en poids et particulièrement de préférence en une quantité de 15 à 22 % en poids, par rapport au poids total du revêtement.

6. Papier CF selon l'une des revendications précédentes, **caractérisé en ce qu'**un autre liant est présent dans le revêtement.

7. Papier CF selon la revendication 6, **caractérisé en ce que** l'autre liant est choisi dans le groupe constitué d'amidons natifs, d'amidons modifiés, d'alcool polyvinylique, de latex de styrène-butadiène (latex SB) et de latex de styrène-acrylate (latex SA).

8. Papier CF selon la revendication 7, **caractérisé en ce que** l'autre liant est un latex de styrène-butadiène et/ou latex de styrène-acrylate.

9. Papier CF selon l'une des revendications précédentes, **caractérisé en ce que** la matière biopolymère réticulée sous forme de nanoparticules est présente en une quantité de 2 à 99 % en poids, de préférence en une quantité de 10 à 80 % en poids et particulièrement de préférence en une quantité de 40 à 60 % en poids, par rapport au poids total du liant.

10. Papier CF selon l'une des revendications précédentes, **caractérisé en ce que** l'accepteur de couleur est choisi dans le groupe constitué de résines phénoliques dopées au zinc et de sels de zinc de dérivés d'acide salicylique alkylarylés, de préférence styrylés, ou de mélanges de ceux-ci.

11. Papier CF selon l'une des revendications précédentes, **caractérisé en ce que** le revêtement contient en tant qu'autre liant un latex de styrène-butadiène et/ou un latex de styrène-acrylate, en tant qu'accepteur de colorant des sels de zinc de dérivés d'acide salicylique styrylés ou des résines phénoliques dopées au zinc, en tant que pigment de couchage du CaCO₃ et d'autres auxiliaires.

12. Papier CF selon la revendication 11, **caractérisé en ce que** la matière biopolymère réticulée sous forme de nanoparticules est présente en une quantité de 2 à 99 % en poids, de préférence en une quantité de 10 à 80 % en poids, préférentiellement en une quantité de 40 à 60 % en poids, par rapport au poids total du liant.

13. Utilisation du papier CF selon l'une des revendications précédentes en tant que papier autocopiant en combinaison avec un papier CB ou un papier CFB.

14. Utilisation du papier CF selon l'une des revendications 1 à 12 dans un procédé d'impression offset, en particulier un procédé d'impression offset par durcissement aux UV.
